# EUROPEAN PATENT APPLICATION

(11) **EP 4 601 091 A1**
(43) Date of publication of application: **13.08.2025**
(21) Application number: 24809531.7
(22) Date of filing: 18.09.2024
(51) Int. Cl.: H01M 50/244

(54) **BATTERY CASE**

(30) Priority: 27.12.2023 CN 202323592653 U
(71) Applicant: Eve Power Co., Ltd., Jingmen, Hubei 448000 (CN)
(72) Inventor: LI, Qiuping, Jingmen, Hubei 448000 (CN); ZHU, Pengxiang, Jingmen, Hubei 448000 (CN); ZHANG, Minhui, Jingmen, Hubei 448000 (CN); CHEN, Xianyang, Jingmen, Hubei 448000 (CN)
(74) Representative: Berggren Oy
(86) International application number: PCT/CN2024/119382
(87) International publication number: WO 2025/139083

(57) **Abstract**

The present disclosure relates to a battery box, including: a case, where a top portion of the case is provided with an opening; and a top cover including a cover body; where the top cover further includes a boss connected to an edge of the cover body, and the boss is welded to the case to co-seal the opening with the cover body; the boss has a first top portion and an opposite first bottom portion, the cover body has a second top portion and an opposite second bottom portion, a distance between the first top portion and the first bottom portion is greater than a distance between the second top portion and the second bottom portion, and the first bottom portion is provided with a guide portion.

## Description

This application claims priority to Chinese Patent Application No. 202323592653.7, filed with the Chinese Patent Office on December 27, 2023, content of which is incorporated herein by reference in its entirety.

### TECHNICAL FIELD

The present disclosure relates to the field of battery technologies, and more particular to a battery box.

### BACKGROUND

A lithium battery has advantages of small volume, high energy density, long service life, environmental protection, and the like, and is widely applied to industries such as automobiles, electronic products, and energy storage systems.

### SUMMARY

Currently, a cover plate of a box accommodating a battery core is gradually thinned, so that the cover plate is easily welded through an aluminum case when the cover plate is laser welded onto the aluminum case, so as to make the laser passing through the aluminum case directly illuminate the core, resulting in affecting the performance of the core.

Accordingly, there is an urgent need to design a battery box to address the above technical problems.

The present disclosure provides a battery box, including: a case, where a top portion of the case is provided with an opening; and a top cover including a cover body; where the top cover further includes a boss connected to an edge of the cover body, and the boss is welded to the case to co-seal the opening with the cover body; the boss has a first top portion and an opposite first bottom portion, the cover body has a second top portion and an opposite second bottom portion, a distance between the first top portion and the first bottom portion is greater than a distance between the second top portion and the second bottom portion, and the first bottom portion is provided with a guide portion.

### Beneficial Effects

According to the battery box provided in the present disclosure, a contact area 1 between the top cover and the case is increased by providing the boss at the edge of the cover body and enabling the distance between the first top portion and the first bottom portion of the boss to be greater than the distance between the second top portion and the second bottom portion of the cover body, so that it is not easy to weld through the top cover in a process of welding the top cover, the core is not affected by the laser, and a desired fusion depth can be achieved after welded to enable a good tensile strength between the top cover and the case.

### DESCRIPTION OF THE DRAWINGS

FIG. 1 is a partial cross-sectional view of a battery box according to first and second embodiments.
FIG. 2 is a partial cross-sectional view of a battery box according to a third embodiment for showing a groove having an arc-shape bottom.
FIG. 3 is a partial cross-sectional view of a battery box according to a third embodiment for showing a triangular groove.
FIG. 4 is a partial cross-sectional view of a battery box according to a third embodiment for showing a trapezoidal groove.
FIG. 5 is a partial cross-sectional view of a battery box according to a fourth embodiment.
FIG. 6 is a partial cross-sectional view of a battery case according to a fifth embodiment.

### REFERENCE NUMERALS OF THE ACCOMPANYING DRAWING:

1. Case; 2. Top cover; 21. Cover body; 22. Boss; 221. First extension portion; 222. Bending portion; 223. Second extension portion; 224. Guide surface; 225. Groove; and 3. Welding surface.

### DETAILED DESCRIPTION

### First embodiment

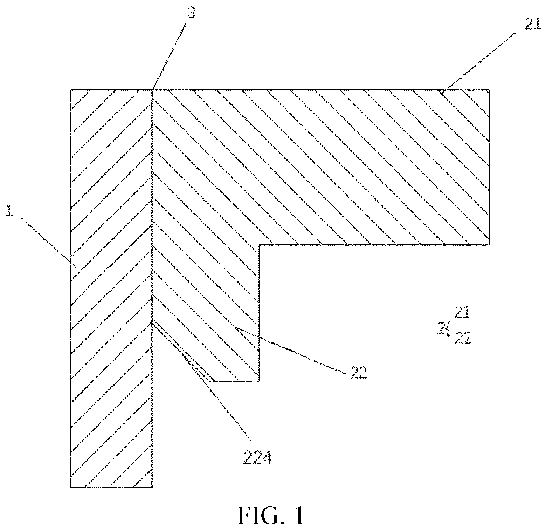

Referring to FIG. 1, the embodiment of the present disclosure provides a battery box, including:
a case 1, where a top portion of the case 1 is provided with an opening; and
a top cover 2 including a cover body 21;
where the top cover 2 further includes a boss 22 connected to an edge of the cover body 21, the boss 22 is welded to the case 1 so as to co-seal the opening with the cover body 21; the boss 22 has a first top portion and an opposite first bottom portion, the cover body 21 has a second top portion and an opposite second bottom portion, a distance between the first top portion and the first bottom portion of the boss 22 is greater than a distance between the second top portion and the second bottom portion of the cover body 21, and the first bottom portion of the boss 22 is provided with a guide portion.

A contact area between the top cover 2 and the case 1 is increased by providing the boss 22 at the edge of the cover body 21 and enabling the distance between the first top portion and the first bottom portion of the boss 22 to be greater than the distance between the second top portion and the second bottom portion of the cover body 21, so that it is not easy to weld through the top cover 2 in a process of welding the top cover 2, the core is not affected by the laser, and a desired fusion depth can be achieved after welded to enable a good tensile strength between the top cover 2 and the case 1.

### Second embodiment

Referring to FIG. 1, the embodiment of the present disclosure provides a battery box, including: a case 1 and a top cover 2.

A top portion of the case 1 is provided with an opening. The top cover 2 is used to seal the opening and includes an integrally formed cover body 21 and a boss 22 connected to an edge of the cover body 21. The boss 22 is welded to a side wall of the case 1, and a contact surface between the boss 22 and the case 1 is a welding surface 3.

The boss 22 has a first top portion and an opposite first bottom portion, the cover body 21 has a second top portion and an opposite second bottom portion, the first top portion of the boss 22 is flush with the second top portion of the cover body 21, and the first bottom portion of the boss 22 is located below the second bottom portion of the cover body 21. That is, the boss 22 is thicker than the cover body 21 by 1-5mm in a direction from the first top portion to the first bottom portion.

The first bottom portion of the boss 22 is provided with a guide portion having a guide surface 224 close to a welding portion between the boss 22 and the case 1, and a distance between the guide surface 224 and a side wall of the case 1 is increased in the direction from the first top portion to the first bottom portion, and an included angle between the guide surface 224 and the side wall of the case 1 is 30-60 degrees. The guide surface 224 facilitates insertion of the top cover 2 into the opening of the case 1 for ease of assembly.

### Third embodiment

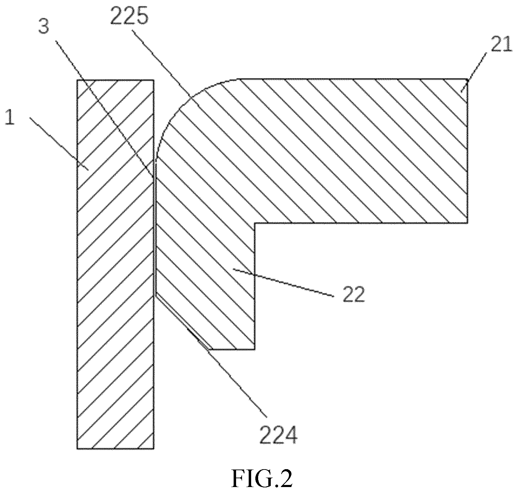

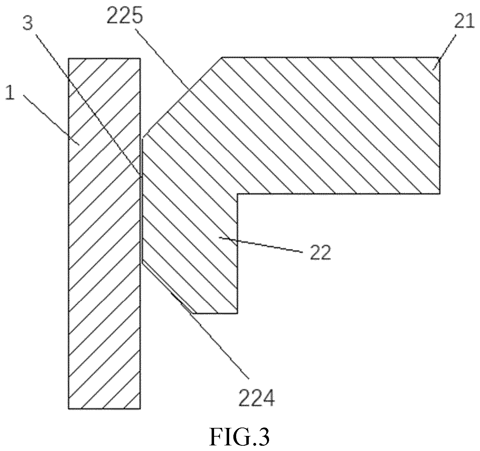

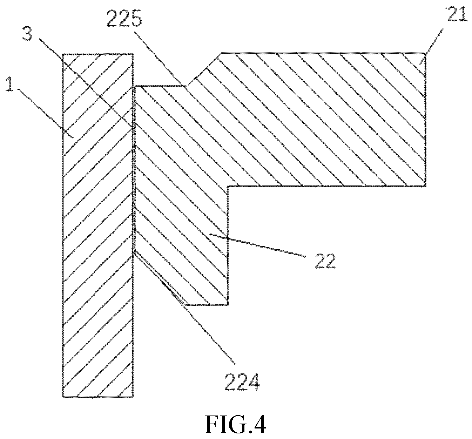

Referring to FIGS. 2, 3 and 4, the third embodiment differs from the second embodiment in that the first top portion of the boss 22 is provided with a groove 225 facing the side wall of the case 1, and a distance between the groove 225 and the welding surface 3 is zero. The groove 225 is used to accommodate melt generated when the top cover 2 is welded to the case 1, so as to reduce a remaining height generated after the top cover 2 is welded to the case 1 and improve the flatness of the top of the battery box. In the present embodiment, the cover body 21 and the boss 22 are formed by bending the edge of the top cover 2 downward, and the guide surface 224 is formed at the first bottom portion of the boss 22 by processing the boss 22. A rounded corner formed by stretching a portion of the top cover 2 in the process of bending the edge of the top cover 2 can be used as the grooves 225, where the groove 225 has an arc-shaped bottom. In addition, the boss 22 and the cover body 21 may be formed by other molding processes, and the groove 225 may be additionally processed. The groove 225 may have a triangular shape, a trapezoidal shape, or the like. Preferably, the groove 225 has a depth of 0.3-1 mm, which is proportional to a thickness of the top cover 2.

Preferably, a length of the welding surface 3 is longer than a thickness of the cover body 2 by 1-5mm in the direction from the first top portion to the first bottom portion.

### Fourth embodiment

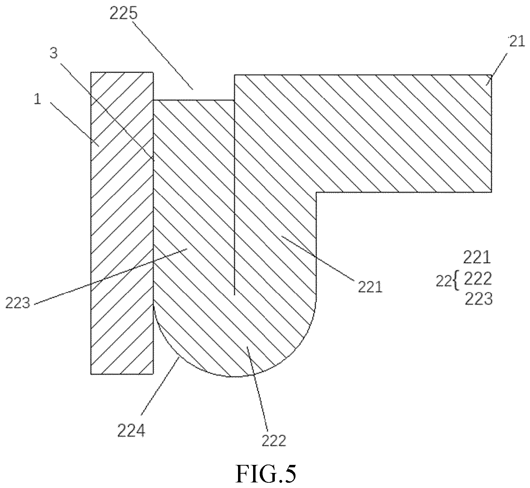

Referring to FIG. 5, the fourth embodiment differs from the third embodiment in that the boss 22 includes a bending portion 222, a first extension portion 221 and a second extension portion 223 disposed opposite to the first extension portion 221 in a direction perpendicular to a direction from the second top portion to the second bottom portion, where the first extension portion 221 is positioned between the second extension portion 223 and the cover body 21 and attached to the second extension portion 223. A top portion of the first extension portion 221 is connected to the edge of the cover 21 in a manner of bending the top portion, a bottom portion of the first extension portion 221 is located below the bottom portion of the cover body 21, the bending portion 222 is connected between the bottom portion of the first extension portion 221 and a bottom portion of the second extension portion 223, the groove 225 is formed by enclosing a top portion of the second extension portion 223, the case 1, and the top portion of the first extension portion 221, and the guide surface 224 is formed on the bending portion 222. In the present embodiment, a contact surface between the second extension portion 223 and the side wall of the case 1 is a welding surface 3. The first extension portion 221, the bending portion 222, and the second extension portion 223 are sequentially formed by bending the cover body 21 twice, and a depth of the groove 225 is adjusted by controlling a length of the second extension portion 223. Due to the process characteristics, the guide surface 224 in the present embodiment has a circular arc shape, and the bending portion 222 has a U-shaped structure.

### Fifth embodiment

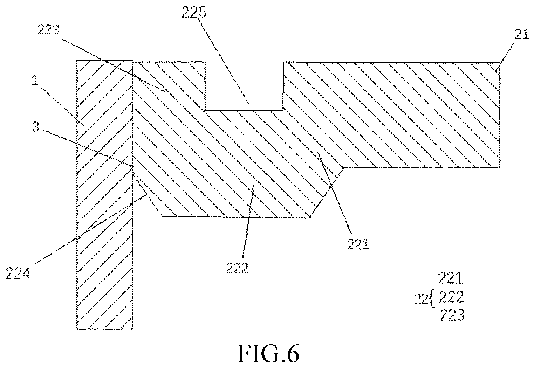

Referring to FIG. 6, the fifth embodiment differs from the fourth embodiment in that the groove 225 is formed by enclosing the top portion of the first extension portion 221, the top portion of the second extension portion 223, and the bending portion 222. In an actual production, the first extension portion 221, the bending portion 222, and the second extension portion 223 are sequentially formed by bending the cover body 21 three times, and there is a distance between the groove 225 and the welding surface 3, which is less than or equal to 2mm, so that the groove 225 can be as close as possible to the welding surface 3, thereby accommodating the melt generated by welding. In the present embodiment, the guide surface 224 formed on the bending portion 222 may be an arc surface or a plane surface. When the guide surface 224 is the plane surface, the included angle between the guide surface 224 and the side wall of the case 1 is 30-60 degrees.

The first extension portion 221, the bending portion 222, and the second extension portion 223 in the present embodiment may also be obtained by stamping the edge of the top cover 2. The first extension portion 221 and the second extension portion 223 are formed by stamping the edge of the top cover 2 in a direction perpendicular to the top cover 2 to flow a portion of the material of the top cover 2 toward both sides, and finally a groove formed by stamping the edge of the top cover 2 is the groove 225 for accommodating the melt.

## Claims

1. A battery box, comprising:
a case (1), wherein a top portion of the case (1) is provided with an opening; and
a top cover (2) comprising a cover body (21);
wherein the top cover (2) further comprises a boss (22) connected to an edge of the cover body (21), the boss (22) is welded to the case (1) to co-seal the opening with the cover body (21); the boss (22) has a first top portion and an opposite first bottom portion, the cover body (21) has a second top portion and an opposite second bottom portion, a distance between the first top portion and the first bottom portion is greater than a distance between the second top portion and the second bottom portion, and the first bottom portion is provided with a guide portion.

2. The battery box of claim 1, wherein the guide portion has a guide surface (224) close to a welding portion between the boss (22) and the case (1), and a distance between the guide surface (224) and a side wall of the case (1) is increased in a direction from the first top portion to the first bottom portion.

3. The battery box of claim 1, wherein the first top portion of the boss (22) is provided with a groove (225) close to a welding surface (3) between the boss (22) and the case (1).

4. The battery box of any one of claims 1-3, wherein the cover body (21) and the boss (22) are integrally formed, and the first top portion of the boss (22) is connected to an edge of the top cover (2) in a manner of bending the first top portion of the boss (22).

5. The battery box of claim 4, wherein the guide portion has a guide surface (224) close to a welding portion between the boss (22) and the case (1), and an included angle between the guide surface (224) and a side wall of the case (1) is 30-60 degrees.

6. The battery box of claim 3, wherein the cover body (21) and the boss (22) are integrally formed, the boss (22) comprises a bending portion (222), a first extension portion (221), and a second extension portion (223) disposed opposite to the first extension portion (221) in a direction perpendicular to a direction from the second top portion to the second bottom portion, the first extension portion (221) is located between the second extension portion (223) and the cover body (21), a top portion of the first extension portion (221) is connected to the edge of the cover body (21) in a manner of bending the top portion of the first extension portion (221), a bottom portion of the first extension portion (221) is located below the bottom portion of the cover body (21), the bending portion (222) is connected between the bottom portion of the first extension portion (221) and a bottom portion of the second extension portion (223), the groove (225) is formed by enclosing a top portion of the second extension portion (223), the case (1), and the top portion of the first extension portion (221), and the guide surface (224) is formed on the bending portion (222).

7. The battery box of claim 3, wherein the cover body (21) and the boss (22) are integrally formed, the boss (22) comprises a bending portion (222), a first extension portion (221), and a second extension portion (223) disposed opposite to the first extension portion (221) in a direction perpendicular to a direction from the second top portion to the second bottom portion, a top portion of the first extension portion (221) is connected to the edge of the cover body (21) in a manner of bending the top portion of the first extension portion (221), a bottom portion of the first extension portion (221) is located below the bottom portion of the cover body (21), the bending portion (222) is connected between the bottom portion of the first extension portion (221) and a bottom portion of the second extension portion (223), the groove (225) is formed by enclosing the top portion of the first extension portion (221), a top portion of the second extension portion (223), and the bending portion (222), and the guide surface (224) is formed on the bending portion (222).

8. The battery box of claim 6 or 7, wherein a distance between the groove (225) and the welding surface (3) is less than or equal to 2 mm.

9. The battery box of claim 1, wherein the boss (22) and the case (1) have a welding surface (3), and a length of the welding surface (3) is greater than a thickness of the top cover (2) in a direction from the first top portion of the boss (22) to the first bottom portion of the boss (22).

10. The battery box of claim 9, wherein the length of the welding surface (3) is longer than the thickness of the cover (21) by 1-5 mm in the direction from the first top portion of the boss (22) to the first bottom portion of the boss (22).

11. The battery box of any one of claims 3-9, wherein a distance between the groove (225) and the welding surface (3) is zero.

12. The battery box of any one of claims 3-9, wherein the groove (225) has an arc-shaped bottom.

13. The battery box of any one of claims 3-9, wherein a shape of the groove (225) comprises a triangle shape or a trapezoidal shape.

14. The battery box of any one of claims 2-9, wherein the guide surface (224) has a circular arc shape.

15. The battery box of any one of claims 6-9, wherein the bending portion (222) has a U-shaped structure.
